Europäisches Patentamt

European Patent Office

Office européen des brevets

(11) Veröffentlichungsnummer : **0 012 418**
**B1**

# EUROPÄISCHE PATENTSCHRIFT

(45) Veröffentlichungstag der Patentschrift :
28.04.82

(21) Anmeldenummer : 79105054.5

(22) Anmeldetag : 10.12.79

(51) Int. Cl.³ : **G 01 N 15/00, G 01 N 33/48,**
**G 01 D  1/14, G 06 F 15/42**

(54) Anordnung zur Klassierung von in einer Blutprobe enthaltenen Teilchen.

(30) Priorität : 19.12.78 CH 12907/78

(43) Veröffentlichungstag der Anmeldung :
25.06.80 (Patentblatt 80/13)

(45) Bekanntmachung des Hinweises auf die Patenterteilung : 28.04.82 Patentblatt 82/17

(84) Benannte Vertragsstaaten :
AT BE CH DE FR GB IT NL SE

(56) Entgegenhaltungen :
FR - A - 2 097 763
FR - A - 2 231 002
FR - A - 2 362 386

(73) Patentinhaber : CONTRAVES AG
Schaffhauserstrasse 580
CH-8052 Zürich (CH)

(72) Erfinder : Frey, Raymond, Dr.
Schweigmatt 39
CH-8055 Zürich (CH)
Erfinder : Voellmy, Rudolf, Dr.
Riedhofstrasse 100
CH-8049 Zürich (CH)

(74) Vertreter : Köver, François, Dr. et al
Patentanwälte H.Mitscherlich K. Gunschmann, Dr. W.
Körber, J.Schmidt-Evers Steinsdorfstrasse 10
D-8000 München 22 (DE)

Imprimerie Jouve, 18, rue St-Denis, 75001 Paris, France

# 0 012 418

## Anordnung zur Klassierung von in einer Blutprobe enthaltenen Teilchen

Die Erfindung liegt im Gebiet der Teilcheanalyse mit elektronischen, optischen oder mechanischen Mitteln und betrifft insbesondere das Teilgebiet der Analyse von Blutkörperchen. Sie bezieht sich auf eine Anordnung der im Oberbegriff des Anspruchs 1 genannten Art.

Die Analyse eines Gemisches von Teilchen verschiedener Grösse ist je nach Verteilung der vorliegenden Klassen sehr problematisch. Mit Verteilung ist in der Folge gemeint, eine diskrete Verteilung des Merkmals Körpervolumen und im engeren Sinn ein Histogramm der Häufigkeit von Körpervolumina. Im statistischen Sinn ist das Histogramm, oder die Verteilung, die Wahrscheinlichkeitsdichte, dass ein Merkmal wertmässig innerhalb eines bestimmten Intervalls liegt. Die Merkmale können verschiedener Art, beispielsweise physikalisch, chemisch, morphologisch und andere mehr sein. Ist man nur an der Teilchenzahl einer bestimmten Klasser interessiert, die idealerweise von der Verteilung anderer Klassen isoliert vorliegt, ist die Analyse eindeutig, auftretende Fehler sind meist apparativen Charakters und die Genauigkeit wird nur durch das dem System inhärente Signal/Rauschverhältnis begrenzt. Sobald jedoch Mischverteilungen vorliegen, wobei zum Beispiel gleich grosse Teilchen verschiedenen Teilchenspezies oder Klassen je einer eigenen Verteilungsdichte angehören, werden Kriterien zur Trennung der überlappenden Verteilungen nötig.

Ist von solch einer Mischverteilung bekannt, dass alle Klassen normal verteilt sind, dann können beispielsweise die endlich vielen Klassen nach einer von G. Doetsch angegebenen Methode ermittelt werden. Ihre Durchführung ist allerdings sehr mühsam und setzt voraus, dass die Mischverteilung durch die Angabe des Mittelwertes und der Varianz schon bekannt ist. Bei den hier interessierenden Anwendungen wird meistens jedoch nur eine empirische Verteilung bekannt sein. Hier liefert beispielsweise das Wahrscheinlichkeitspapier ein rohes Verfahren, um durch entsprechendes Probieren die einer Mischverteilung von genau zwei Klassen eventuell zugrunde liegende Normalverteilung ausfindig zu machen.

Bei den bisher bekannten Teilchenanalysiergeräten greift der Mensch direkt ein, um bestimmte Bereiche einer Mischverteilung von Körpervoluminas abzutrennen. Er begutachtet das auf eine nicht näher beschriebene Weise sichtbar gemachte Verteilungsspektrum oder die daraus hergeleiteten Funktionen und bestimmt auf Grund von ihm ausgewählter Kriterien eine « Trennschwelle », unterhalb derer beispielsweise die Teilchen entsprechend ihrer Grösse der einen und oberhalb derer die Teilchen der anderen Klasse zugeteilt werden. Die einmal gewählte Schwelle wird dem System eingeprägt, der Teilchenanalysator erkennt beispielsweise nur noch die den Teilchen zugehörigen Signale unter- oder oberhalb dieser Schwelle. Angenommen, die Signale unterhalb der Schwelle rühren von störenden Teilchen her, die Signale oberhalb der Schwelle von Teilchen, die analysiert werden sollen, so hat man in der eingestellten Schwelle einen Diskriminator für Stör- und Nutzsignale. Werden Verteilungen mehrerer Grössenklassen ausgemessen, müssen entsprechend mehr Trennschwellen ausgewählt und dem Messsystem eingeprägt werden, vorausgesetzt, dass die einzelnen Klassen genügend separiert sind, um eine Mischverteilung überhaupt noch zu erkennen. Dies gilt natürlich auch für eine bimodale Mischverteilung.

Wird nun ein Teilchenanalysator für einen speziellen Zweck, das heisst für eine begrenzte Anwendung eingesetzt, sagen wir zur Blutkörperchenanalyse, so werden bei vielen Geräten die Schwellen fest eingestellt, um die Teilchen, welche gezählt oder gemessen werden sollten, von den Teilchen, die man nicht in die Messung eingehen lassen will, abzutrennen.

Das Setzen von Trennschwellen in eine multimodale Verteilungskurve führt in erster Konsequenz zu gestutzten Verteilungen ; der Stutzungsgrad hat einen direkten Einfluss auf das Integral über die Verteilungsdichte, beispielsweise auf das Resultat einer Zählung, und bestimmt, meist dominant, deren Genauigkeit. Dies gilt nur, wenn man es bei der gestutzten Verteilung belässt ohne sie adäquat zu korrigieren. Verändert sich die Verteilungskurve in der Umgebung einer festen Schwelle, so verändert sich durch die zu- oder abnehmende Stutzung der zu analysierenden Verteilung auch das Resultat der Analyse. Es kann bei vorangegangener Fehlplazierung der Trennschwelle genauer werden, normalerweise tritt jedoch das Gegenteil ein ; das erhaltene Resultat wird, weil die Schwelle vorher meist optimal eingestellt war, schlechter. Ist beispielsweise ein Teilchenanalysator für die Volumenverteilungsanalyse und die Zählung von Erythrozyten in Menschenblut ausgelegt, das heisst, alle abgetasteten Signale von Partikeln aus einem bestimmten Teilchengrösseninterval sollen zur Messung beitragen und eine Trennschwelle soll die von Artefakten, also Partikeln die nicht Erythrozyten sind, herrührenden Signale von der Messung ausschliessen, so kann dieser Analysator von Ausnahmen abgesehen, ohne Korrektur der Schwelle nicht zur Zählung der Erythrozyten in Tierblut verwendet werden. Ist der Signal/Rauschabstand des Teilchenanalysators ungenügend, so erfordert bereits der physiologisch mögliche Variationsbereich der Zellgrössen im Humanblut eine individuelle Anpassung der Schwelle an jede einzelne Blutprobe. Gar nicht verwenden lässt sich ein solcher Analysator zur Analyse von irgendwelchen Partikeln.

Man erkennt daraus deutlich den bezüglich einer Verteilungsfunktion sehr engen Anwendungsbereich und das bei ungenügendem Signal/Rauschabstand zudem kritische Verhalten eines Teilchenanalysators mit festeingestellten Trennschwellen.

Man ist dazu übergegangen, Teilchenanalysatoren derart auszurüsten, dass die Trennschwelle oder -schwellen mit Hilfe einer aussen am Gerät angebrachten Vorrichtung nach Bedarf durch den Benützer eingestellt werden kann. Was vorher die Aufgabe eines dafür instruierten Spezialisten war, muss nun, in unzweifelhaft gleich guter Qualität vom jeweiligen Benützer des Gerätes ebenfalls gefordert werden. Die sogenannten einstellvorschriften sollen ein sicheres « Setzen » einer gewünschten Trennschwelle dem Benützer erlauben, ohne dass sein Eingriff die Analysenresultate verfälscht. Solche Einstellvorschriften sind teils sehr einfacher Natur, ihre Ausführung dagegen schwierig und unsicher.

So liefert die Schwellenpositionierung mit Hilfe eines Oszilloskops, auf dem die Partikelsignale sichtbar gemacht und durch variieren eines Diskriminators oder Schwelle separiert werden, schlecht reproduzierbare Werte. Ein anderes empfohlenes Verfahren verlangt die Ermittlung einer Summenverteilungskurve. Diese erhält man durch Auftragen von Zählresultaten in Abhängigkeit der Schwellenposition, wobei in Idealfall ein horizontales Segment entsteht : das Plateau, anhand dessen die Schwelle eingestellt werden kann. Je weniger das Segment oder Plateau von der Horizontalen abweicht und je grösser sein Bereich ist, umso grösser ist der Signal/Rauschabstand des Analysators. In der Praxis der Blutkörperchenanalyse weist das Plateau jedoch keinen horizontalen Abschnitt auf und ist auch bereichsmässig eng begrenzt.

Die Positionierung der Schwelle ist aufgrund der erarbeiteten Kurve unsicher. Dazu kommt der nicht unerhebliche Zeitaufwand für die Bestimmung der Summenverteilungskurve, zumal sie periodisch und für Erythrozyten und Leukozyten getrennt aufzunehmen ist. Zudem sind die zu analysierenden Zellsuspensionen oft instabil, was vielen Benützern nicht bekannt ist ; dadurch wird die Summenverteilungskurve verfälscht und die darauf basierende Schwellenpositionierung fragwürdig. Einen möglichen Ausweg aus diesem Problemkreis findet man in der Verbesserung des Signal/Rauschabstandes des Analysensystems ; ein sensorseitiger und elektronischer Mehraufwand kann eine unterkritische Schwellenpositionierung ermöglichen. Ein anderer Ausweg ist eine adaptive Schwellenanpassung.

Eine solche Schwellenanpassung ist aus dem Patentdokument FR-A-2097763 bekannt. Darin wird das Auffinden eines Ueberganges zwischen zwei überlappenden Verteilungen von Signalen beschrieben. Es werden Mittel beschrieben, mit welchen feststellbar ist, ob und in welchem Kanal eines Histogramms die gespeicherte Frequenz kleiner ist als die in den beiden unmittelbar benachbarten Kanälen gespeicherte Frequenz. Dieses bekannte System dient zur Feststellung eines lokalen Helligkeitsextremums in einem Helligkeitsfeld beim Suchen und Erkennen eines charakteristichen Objektes in einem Sichtfeld, wobei erwähnt wird, dass das Objekt ein Blutkörperchen sein kann. Es wird so vorgegangen, dass nach dem Speichern eines vollständigen Histogramms die Zähler der einzelnen Kanäle synchron inkrementiert werden, bis sie aufgefüllt sind und in diesem Zustand blockiert bleiben, und es wird dabei festgestellt, welcher Zähler als letzter aufgefüllt wird : dies ist der Zähler des Kanals, in welchem das gesuchte Extremum sich befindet. Wie ersichtlich, wird bei diesem Vorgang das Histogramm gelöscht, eine Analyse der Signalverteilung ist danach nicht mehr möglich. Tatsächlich wird bei dieser bekannten Lehre in zwei Schritten verfahren : in einem ersten Schritt wird bei der Aufnahme eines ersten Histogramms das Extremum festgestellt und eine Schwelle gesetzt, dann wird in einem zweiten Schritt das Histogramm erneut aufgenommen und mit Hilfe der nun gesetzten Schwelle ausgewertet. Ein derartiges Vorgehen, bei welchem das erste erstellte Histogramm gelöscht wird, ist nur bei solchen Messungen möglich, bei denen ein zeitlich im wesentlichen unverändertes Bild abgetastet wird, sei es das Helligkeitsbild eines Zielsuchers für Navigationszwecke, sei es das Bild eines Blutkörperchens in Feld eines Mikroskops. Das beschriebene Vorgehen ist nicht anwendbar, wenn kein zeitlich unverändertes Bild zur Verfügung steht, z.B. wenn die Signale keine Helligkeitssignale sind, sondern die Grösse eines Teilchens in einer Teilchensuspension bezeichnen. In einem Teilchenanalysator zum Gebrauch in einem medizinischen Labor wird das Histogramm ziemlich langsam aufgebaut : bei Reihenuntersuchungen ist es wichtig, die Dauer jeder einzelnen Analyse so kurz wie möglich zu halten, und es ist daher unerwünscht, jede Analyse zweimal auszuführen (einmal um eine Schwelle zu setzen, einmal um das Histogramm auszuwerten) ; zudem würde bei einem Vorgehen nach dem zitierten Patentdokument eine doppelte Menge der zu analysierenden Teilchensuspension als bei einer üblichen Teilchenanalyse benötigt werden, was bei den potentiellen Käufern des Analysensystems auf Kritik stossen würde.

Es ist die Aufgabe der Erfindung, eine Anordnung zu schaffen, welche bei der Analyse von Teilchen mit einer bimodalen Mischverteilung der Teilchengrösse das selbsttätige Aufsuchen des Schwellenwertes zur Unterscheidung zwischen den einander überlappenden Grössenverteilungen gewährleistet, ohne eine im Vergleich zur herkömmlichen monomodalen Teilchenanalyse längere Dauer oder grössere Menge der Teilchensuspension zu erfordern.

Diese Aufgabe wird durch die im Kennzeichen des Anspruchs 1 angegeben Merkmale gelöst. Vorteilhafte Weiterbildungen der Anordnung ergeben sich aus den Unteransprüchen.

Vorteilhaft ist bei der erfindungsgemäßen Anordnung insbesonders, dass sie bezüglich des Verteilungsspektrums breitbandig anwendbar ist, da sie sich in einem weiten Variationsbereich der Grössenverteilung selbsttätig anpasst. Zudem bleibt die Messsicherheit und damit die Analysengenauigkeit auch bei der Bedienung durch weniger gut geschulte Bedienungspersonen erhalten, wobei diese Vorteile nicht durch längere Analysenvorgänge oder grössere Probenmengen erkauft werden.

Die Beschreibung der Erfindung erfolgt nun an einem Beispiel der Blutkörperchenanalyse. Es sollen die Grössenverteilung und Anzahl von Erythrozyten in Menschen- oder Tierblut bestimmt werden. Es ist

**0 012 418**

bekannt, dass die Erythrozyten im Menschenblut eine typische Grössenklasse von 40-130 fl (fl = femtoliter) bilden, das Maximum der Verteilung liegt ungefähr bei 80 fl. Die Erythrozyten im Blut der Hauskatze dagegen bilden eine typische Grössenklasse von 20-80 fl und deren Maximum liegt bei ungefähr 45 fl. Die nachstehende Tabelle zeigt die typischen Erythrozytenverteilungen im Blut einiger verschiedener Spezies.

| | Klasse (fl) ca. 95% aller Teilchen | unt.Grenze | Max. |
|---|---|---|---|
| Mensch | 40 - 130 | 35 | 80 |
| Katze | 20 - 80 | 15 | 45 |
| Hund (weibl.) | 30 - 120 | 25 | 60 |
| Meerschwein | 40 - 130 | 30 | 70 |
| Maus | 25 - 80 | 20 | 45 |
| Pferd | 25 - 80 | 20 | 40 |
| Fohlen | 15 - 70 | 10 | 35 |
| Kuh | 25 - 80 | 20 | 45 |
| Kalb | 15 - 70 | 10 | 35 |

Fast jede dieser Erythrozytenanalysen würde beim Wechseln der Spezies die eingangs erwähnte zeitraubende Umstellung der Trennschwellen erfordern. Innerhalb des Humanbereiches muss man normalerweise nicht mit grossen Abweichungen der Erythrozytenverteilung rechnen, berücksichtigt man jedoch solcherart Aufgaben im Veterinärbereich, so versteht man, dass das selbsttätige Aufsuchen und Einstellen der Trennschwellen die Arbeit nicht nur erleichtert, sondern auch die Sicherheit, besonders bei routineartigen Reihenanalysen weitgehend konstant hält.

Zur Analyse wird eine zweckmässig vorbereitete Probe einer Erythrozyten enthaltenden Flüssigkeit durch eine Abtastzone durchgeleitet, wobei die Abtastmittel elektrisch oder optisch ausgestaltet sein können. Die in der Flüssigkeit suspendierten Teilchen werden während ihres Durchganges durch die Abtastzone abgetastet, wobei den abgetasteten Teilchen entsprechende Impulse oder Signale unterschiedlicher Eingenschaften in Abhängigkeit der physikalischen Eigenschaften der abgetasteten Teilchentypen erzeugt werden.

Bei der Analyse von Leukozyten besteht die zweckmässige Vorbereitung unter anderem in Entfernen der typischerweise in 1000-fach höherer Konzentration vorliegenden Erythrozyten mittels Hämolyse. Bei dieser Behandlung werden die Erythrozyten spezifisch zerstört und eine vieltausendfach höhere Konzentration von Zellfragmenten der zerstörten Erythrozyten gegenüber den wohl morphologisch veränderten aber intakten Leukozyten liegt nun in der zu untersuchenden Lösung vor. Diese Fragmente bilden oder sollten es zumindest, eine andere Grössenklasse als die Leukozyten ; es liegt grob betrachtet eine bimodale Mischverteilung vor. Im Idealfall ist die Verteilung der Artefakte, in diesem Fall der Fragmentpartikel, von der Verteilung der Leukozyten gut separiert und eine Trennung der beiden Verteilungen durch eine Trennschwelle führt zu einer gestutzten Verteilung der Leukozyten mit einem sehr kleinen Stutzungsgrad ; eine nachträgliche Korrektur kann sich erübrigen.

Die Praxis zeigt, dass Resultate aus ein,er unkorrigierten, gestutzten Verteilung auch bei stärker überlappenden Mischverteilungen brauchbar sind, allerdings sollte zumindest der Stutzungsgrad oder ein daraus abgeleiteter Wert als « Gütekriterium » des Analysenresultates angegeben werden. Gerade in der Erythrozytenanalyse ist das Abweichen von einer angenäherten Normalverteilung ein Hinweis auf bestimmte pathologische Veränderungen und in graphischer Darstellung als ein weiteres Resultat der Analyse verwendbar. Die Konsequenz daraus : Klassen mit starker Abweichung von der Normalverteilung lassen sich auch mit in die Analyse eingeschalteten, meist aufwendigen Rechenverfahren nicht sicher korrigieren. Das Resultat aus einer gestutzten Verteilung zusammen mit einem Gütekriterium ist leichter zu beurteilen, als ein inadäquat korrigiertes Resultat. So wird in der Praxis auf eine Korrektur der gestutzten Verteilung üblicherweise verzichtet.

Das Vorausbestimmen einer Trennschwelle in Unkenntnis der Verteilung der anfallenden Signale birgt naturgemäss eine Willkür in sich. Da man die zu untersuchende Verteilung in der Zukunft noch nicht « sehen » kann, ist man darauf angewiesen, die Trennschwelle nach möglichst begründeten Vermutungen bezüglich der Verteilung a priori zu setzen, und damit einen Diskriminator zu schaffen, der nur Signalwerte ober- oder unterhalb der Trennschwelle zur Weiterverarbeitung zulässt. Wüsste man über die im nächsten Zeitabschnitt anfallenden Signale mehr, wären präzisere Aussagen eher möglich. So ist es vorteilhafter, an Stelle einer a priori Entscheidung eine solche a posteriori vorzunehmen, indem man die für eine Analyse nötige Signalmenge sowie auch alle zusätzlich anfallenden Signale in einem Speicher

4

ablegt und nach dem Ordnen — in eine Verteilung — die Trennung der darin involvierten Signalklassen vornimmt. Auf diese Weise ist eine Trennschwelle mit grösserer Sicherheit zu setzen, da die störende Ungewissheit inzwischen behoben wurde.

Als erster Schritt wird die Datenakquisition durchgeführt. Die von einem Fühlelement abgegebenen elektrischen Signale oder Impulse werden bei analoger Erfassung beispielsweise an eine Kette von Amplitudendiskriminatoren herangeführt; das Signal wird gemäss seiner Grösse von einem der Diskriminatoren akzeptiert. Die Gesamtheit der den Diskriminatoren nachgeschalteten Integratoren enthält die Verteilung der Signale in Form eines Histogramms. Bei digitaler Erfassung werden die vom Fühlelement abgegebenen elektrischen Signale digitalisiert und als Wertmenge in einem Speicher abgespeichert. Dieser Speicher enthält nach einer entsprechenden Umordnung der Verteilung deren Darstellung als Histogramm. Die abgespeicherten Signalwerte in Form von Einzelsignalen oder Summensignalen liegen diskret in Kanälen vor; diese Kanäle sind entweder einzelne Integratoren oder in einem Digitalspeicher abgelegte Vektoren. Auch eine Partikelanalyse durch mechanisches Sieben in Siebstapeln erzeugt ein Histogramm derart, dass das Siebgeflecht als Diskriminator wirkt und das Sieb an sich einen Kanal darstellt; die Verteilung über den ganzen Siebstapel entspricht einem Histogramm, in dem die Werte als Summengewicht der in den Einzelsieben enthaltenen Partikel vorliegen.

In einem zweiten Schritt wird innerhalb des erzeugten Histogramms ein zu untersuchender Bereich ausgewählt, beispielsweise eine funktionell zusammenhängende Anzahl N von Integratoren, Vektoren oder Sieben. Die gespeicherten Werte dieser Anzahl ausgewählter Kanäle werden einzeln miteinander verglichen um einen Kanal zu finden, dessen abgespeicherter Wert kleiner ist als jeder Wert in den anderen damit verglichenen Kanälen. Damit findet man in erster Näherung ein Minimum in diesem ausgewählten Bereich. Je nach Wahl der Mittel, beispielsweise bei digitaler Auswertung der Signalmenge und bei zusätzlich hoher Auflösung des Verteilungsspektrums, das heisst bei sehr engen, beziehungsweise sehr vielen Kanälen, ist eine Glättung des Histogramms angezeigt, die durch den in diesem Fall ohnehin mitwirkenden Rechner leicht durchgeführt werden kann.

Der dritte Schritt des Vorgehens beinhaltet die Prüfung des gefundenen Minimums sowie eine darauffolgende Entscheidung. Es besteht beispielsweise die Möglichkeit, dass der ausgewählte Bereich eine Flanke des Verteilungsspektrums einschliesst, also das gesuchte Minimum der Verteilung ausserhalb dieses Bereiches liegt. In diesem Fall indiziert das ermittelte Minimum nur den tiefsten Wert dieses Ausschnittes an der Flanke. Das zu suchende Minimum liegt zwischen Kanälen, deren abgespeicherte Werte entweder im wesentlichen von Kanal zu Kanal zunehmen oder mindestens gleichbleiben. Statistische Streuungen in er Nachbarschaft des gesuchten Kanals werden berücksichtigt, indem man die Nachbarschaft um weitere Kanäle vergrössert. Zeigen nun eine zusammenhängende Anzahl Kanäle, die sich unmittelbar auf der einen Seite des ermittelten Kanals (Minimumkanal) anreihen, kleinere Werte, und eine zusammenhängende Anzahl Kanäle auf der anderen Seite größere Werte, so muss der zweite Verfahrensschritt mit neuausgewählten N Kanälen wiederholt werden. Dies bedeutet aber nichts anderes, als ein Verschieben des zu untersuchenden Bereiches innerhalb des Histogramms. Bei systematischem Verschieben fällt das Minimum, welches die zwei Klassen der Verteilung trennt in den Bereich der ausgewählten N Kanäle.

In einem weiteren Schritt kann man den schliesslich ermittelten Kanal, dessen gespeicherter Signalwert das « richtige » Minimum anzeigt, durch einen ihm zugeteilten Kennwert festhalten, bzw. abspeichern. Es ist nun möglich, die beiden Klassen dieser untersuchten bimodalen Verteilung auszuwerten.

Im Beispiel einer Partikelanalyse für Leukozyten enthält die eine Klasse die Erythrozytenfragmente als Artefakte und die andere Klasse die Leukozyten. Die Werte in den Kanälen, welche zur Klasse der Leukozyten gehören, können nun weiter ausgewertet werden, die den Artefakten zugehörigen Werte werden verworfen.

Die Erfindung wird im folgenden anhand der Zeichnungen näher erläutert.

Figur 1 zeigt ein Flussdiagramm für ein zweckmässiges Vorgehen beim Einsatz von digitalen Mitteln und

Figur 2 zeigt ein Beispiel für eine erfindungsgemäße Anordnung.

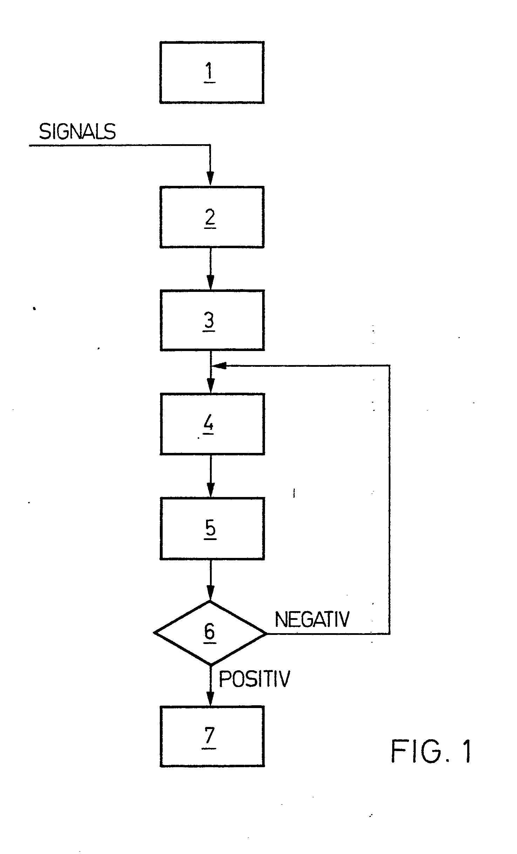

In Figur 1 werden in zusammengefasster Darstellung ein Beispiel für einzelne Schritte angegeben, die mit Hilfe von diskret aufgebauten Digitalschaltungen und/oder programmierbaren Netzwerken durchgeführt werden können. Die nachfolgende Beschreibung gibt in ausführlicher Form die einzelnen Schritte an.

1. Organisation des Speichers :
— Abschätzen des Grössenbereiches der erwarteten Partikelverteilung
— Definieren der diskreten Schrittgrösse
— Definieren der zu verwendenden Anzahl K Kanäle
    K = Partikelverteilung/Diskrete Schrittgrösse
— Zuordnung einer absoluten Teilchengrösse zu jedem Speicherkanal (Diskrimination nach Partikelvolumen ; sinnvoll in aufsteigender Reihenfolge)
— Definieren der Entscheidungskriterien (beispielsweise relative Minima, Inkrementierung und andere mehr).
2. Signalspeicherung :

5

— Echtzeiterfassung (real-time)

— Digitalisierung der vom Fühlelement abgegebenen Signale

— Zuordnung der Digitalwerte zu den entsprechend indizierten Speicherkanälen (gemäss a) im Anspruch 1)

— es ist zweckmässig, die Speicherkanaladresse so zu wählen, dass das digitalisierte Teilchensignal die Speicherkanaladresse darstellt.

3. Aufbereitung der Signalmenge :

— Jede Digitalisierung (in diesem Falle 2-dimensional) ist mit Quantisierungsfehlern behaftet

— es ist zweckmässig, eine Prozedur anzuwenden (beispielsweise durch Aufruf eines Unterprogrammes), welche diese Quantisierungsfehler mindert (entsprechend Anspruch 2)

— ein Ausgleich 1. Ordnung (Glättung) kann angewendet werden

— ein Ausgleich höherer Ordnung kann bei Bedarf angewendet werden.

4. Auswahl eines Bereiches im Histogramm :

— Für die Minimumsuche werden Grenzen durch die Anzahl N zusammenhängenden Speicherkanaladressen festgelegt

— analog für eine eventuelle Maximumsuche.

5. Minimasuche :

— Das Minimum wird mit einem geeigneten Algorithmus durch gegenseitigen Vergleich der Signalwerte in den N Kanälen ermittelt, unter Einbezug der Kriterien von (4) und (gemäss b) im Anspruch 1).

6. Prüfung und Entscheidung :

— Prüfung des ermittelten Minimums ob relativ oder absolut (gemäss d) im Anspruch 1)

— Anwendung der Entscheidungskriterien beim Auftreten von relativen Minimas gemäss (1) und gemäss e) im Anspruch 1

— analog für eine eventuelle Maximumsuche

— werden keine Minima gefunden (zum Beispiel Leermessung, keine auswertbare Separierung der Klassen), wird das Histogramm auf analytische Relevanz geprüft, beispielsweise auf den hämatologischen Aussagewert oder auf apparative Fehler.

7. Verwendung des ermittelten Minimums :

— Bildung der Integrale (Zählung) beidseitig des Minimums (Trennschwelle)

— Resultatausgabe

— Initialisierung einer neuen Messung mittels Steuersignalen, die mit Hilfe des Kennwertes des ermittelten Kanals gebildet werden

— Abgabe von Steuersignalen an zugeschaltete Apparate bei automatischer Probenverarbeitung, beispielsweise zur Verdünnungsänderung

— Anweisungen an den Benützer

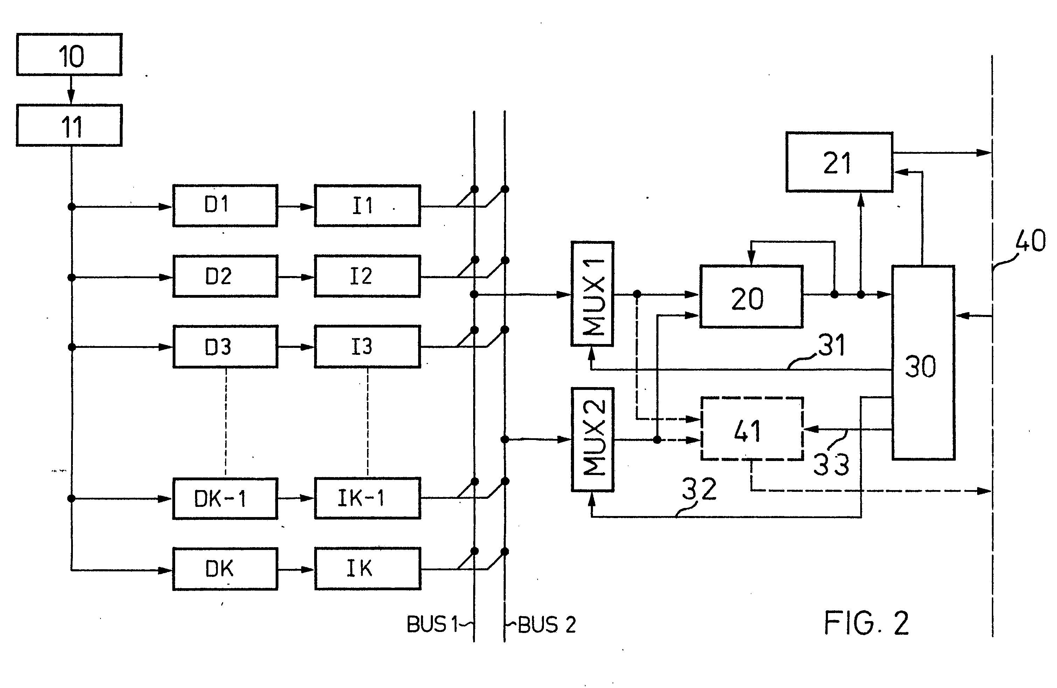

In Figur 2 erkennt man ein System von K Diskriminatoren D1-DK welche, nachdem die diskriminierenden Bedingungen erfüllt sind, die Signale vom Fühlelement auf die Integratoren I1-IK leiten ; diese K Integratoren bilden den Speicher mit K Kanälen. Zwei diesem Speicher nachgeschaltete Multiplexer MUX 1 und MUX 2 sowie ein durch sie angesteuerter Analogkomparator 20 führen den Vergleich der elektrischen Werte in den Kanälen von einer ausgewählten zusammenhängenden Anzahl N durch. Die Auswahl der Kanäle wird von einer nicht näher beschriebenen Steuerung 30 durchgeführt, die üblicherweise ein dem gewünschten Aufwand angepasstes logisches Netzwerk ist. Sollte für diese Steuerung ein Mikroprozessor vorgesehen sein, so ist abzuwägen, ob eine vollständig digitale Durchführung des Verfahrens nicht vorteilhafter wäre. Ein Signal aus dem Analogvergleicher 20 ermöglicht im Kanalkennwertspeicher 21 die Speicherung von einem oder mehreren Kanalkennwerten, wovon mindestens einer jeweils gelöscht wird, sobalt ein noch kleinerer Signalwert aus dem Vergleich resultiert. Ein Analogspeicher 41 ist vorgesehen für die Speicherung von elektrischen Werten, wie Einzelsignale oder Summensignale aus einem einzelnen Kanal oder Signale, die aus einer Mehrzahl von Kanalinhalten aufsummiert wurden (beispielsweise das Integral aller Signale oder Summensignale aus Kanälen auf einer Seite der Trennschwelle). Dieser Speicher gehört zum Auswertungsnetzwerk und ist deswegen von der das Verfahren ausübenden Schaltung abgehoben eingezeichnet.

Im einzelnen haben die Berugszeichen in Figur 2 folgende Bedeutung :

10 Fühlelement

11 Verstärker

$D_{Index}$ Diskriminatoren

$I_{Index}$ Integratoren

20 Analogvergleicher

21 Kanalkennwertspeicher

30 Steuerungsnetzwerk

31 Signalzuführung zur Kanalwahl durch MUX 1

32 Signalzuführung zur Kanalwahl durch MUX 2

33 Signalzuführung für Speicherbefehl in 41

40 Schnittstelle zum Auswertungsnetzwerk

41 Analogspeicher

**Ansprüche**

1. Anordnung zur Klassierung von in einer Blutprobe enthaltenen Teilchen in Abhängigkeit von der Größe eines Teilchenkennwerts, insbesondere des Teilchenvolumens, mit
— einem Fühlelement (10) zur Erzeugung von der Größe des Kennwerts der einzelnen Teilchen entsprechenden elektrischen Signalamplituden,
— einem Vielkanalanalysator (D1-DK, Il-IK) mit K Kanälen zur Speicherung eines Histogramms der Signalamplituden,
— Schaltungseinrichtungen (MUX1, MUX2, 20, 21, 30) zur Auffindung eines ein absolutes Minimum des Histogramms enthaltenden Kanals, .
— einem Speicher (21) zur Aufnahme der Adresse eines Kanals, dessen Inhalt als Minimum erkannt ist,
— einer Signalverarbeitungsschaltung (41) zur Auswertung der auf einer Seite des absoluten Minimums liegenden Nutzinformation des Histogramms,
dadurch gekennzeichnet, daß die Schaltungseinrichtungen folgende Einheiten umfassen :
— zwei Multiplexer (MUX1, MUX2), die eingangsseitig jeweils an die Ausgänge der Kanäle des Vielkanalanalysators (D1-DK, Il-IK) angeschlossen sind,
— einen Komparator (20) zum Vergleich der Ausgangssignale der beiden Multiplexer (MUX1, MUX2),
— ein vom Ausgangssignal des Komparators (20) kontrolliertes logisches Netzwerk (30) zur Steuerung der Multiplexer (MUX1, MUX2), des Speichers (21) und der Signalverarbeitungsschaltung (41) derart, daß am Komparator im Multiplexbetrieb ein Vergleich der Inhalte von N zusammenhängenden Kanälen des Vielkanalanalysators erfolgt, wobei N < K, der dabei ermittelte minimale Kanalinhalt mit den Inhalten jeweils einer Anzahl jeweils beiderseits des betreffenden Minimumkanals liegenden Kanälen zwecks Feststellung der absoluten oder relativen Natur des Minimums verglichen wird, die Lage der N verglichenen Kanäle bezüglich der K Kanäle im Falle der Feststellung eines relativen Minimums geändert wird, und die Signalverarbeitungsschaltung im Falle der Feststellung eines absoluten Minimums innerhalb eines Stazes von N verglichenen Kanälen aktiviert wird. ·

2. Anordnung nach Anspruch 1, dadurch gekennzeichnet, daß N einen ganzzahligen Wert zwischen K/20 und K/5 annimmt.

3. Anordnung nach Anspruch 1, dadurch gekennzeichnet, daß die Anzahlen der jeweils beiderseits des Minimumkanals liegenden Kanäle gleich sind.

**Claims**

1. Arrangement for the classification of particles contained in a blood sample dependent on the size of a particle characteristic value, in particular the particle volume, with
— a sensor element (10) to produce electrical signal amplitudes corresponding to the size of the characteristic value of the individual particles,
— a multi-channel analyser (D1-DK, I1-IK) with K channels to store a histogram of the signal amplitudes,
— circuit devices (MUX1, MUX2, 20, 21, 30) to locate a channel containing an absolute minimum of the histogram,
— a store (21) for receiving the adress of a channel whose content is recognised as minimum,
— a signal processing circuit (41) for evaluating the useful information of the histogram lying on one side of the absolute minimum,
characterised in that the circuit devices incorporate the following units :
— two multiplexers (MUX1, MUX2), which are connected on the input side respectively to the outputs of the channels of the multi channel analyser (D1-DK, I1-IK),
— a comparator (20) to compare the output signals of the two multiplexers (MUX1, MUX2),
— a logical network (30) controlled from the output signal of the comparator (20) for controlling the multiplexers (MUX1, MUX2), the store (21) and the signal processing circuit (41) in such a way that at the comparator in the multiplex operation there occurs a comparison of the contents of N associated channels of the multi-channel analyser, wherein N < K, the minimum channel content thus determined is compared to the contents respectively of a number of channels lying on both sides of the minimum channel in question for the purpose of determining the absolute or relative nature of the minimum, the position of the N compared channels with regard to the K channels in the case of determining a relative minimum is changed, and the signal processing circuit in the case of determining an absolute minimum within a set of N compared channels is activated.

2. Arrangement according to claim 1, characterised in that N assumes a whole number value between K/20 and K/5.

3. Arrangement according to claim 1, characterised in that the numbers of the channels lying respectively on both sides of the minimum channel are equal.

**0 012 418**

## Revendications

1. Installation pour le classement de particules contenues dans un échantillon sanguin en fonction de la dimension d'une grandeur caractéristique des particules notamment du volume des particules avec
— un élément de détection (10) pour générer des amplitudes de signaux électriques correspondant à la valeur de la grandeur caractéristique des diverses particules,
— un analyseur à canaux multiples (D1-DK, I1-IK) avec K canaux pour enregistrer un histogramme des amplitudes de signal,
— des circuits (MUX1, MUX2, 20, 21, 30) pour rechercher un canal comportant un minimum absolu de l'histogramme,
— une mémoire (21) pour recevoir l'adresse d'un canal dont le contenu est reconnu comme minimum,
— un circuit de traitement de signal (41) pour exploiter l'information utile de l'histogramme situé d'un côté du minimum absolu,
caractérisée en ce que les circuits comportent les unités suivantes :
— deux multiplexeurs (MUX1, MUX2) dont l'entrée est reliée à la sortie des canaux de l'analyseur à canaux multiples (D1-DK, I1-IK),
— un comparateur (20) pour comparer les signaux de sortie des deux multiplexeurs (MUX1, MUX2),
— un circuit logique (30) contrôlé par le signal de sortie du comparateur (20) pour commander les multiplexeurs (MUX1, MUX2), la mémoire (21) et le circuit de traitement de signal (41) de façon que, sur le comparateur, dans la plage de multiplexage, il se produise une comparaison des contenus des deux N canaux correspondant de l'analyseur à canaux multiples, N étant inférieur à K, le contenu minimum ainsi déterminé du canal, et les contenus de chaque fois un nombre de canaux situés des deux côtés du canal minimum concerné, étant comparés pour déterminer la nature absolue ou relative du minimum, la position des N canaux comparés par rapport aux K canaux dans le cas d'une constatation d'un minimum relatif étant modifiée et le circuit de traitement de signal est activé au cas où l'on constate un minimum absolu à l'intérieur d'un ensemble de N canaux comparés.

2. Installation selon la revendication 1, caractérisée en ce que N est un nombre entier compris entre K/20 et K/5.

3. Installation selon la revendication 1, caractérisée en ce que les nombres des canaux situés chaque fois de part et d'autre du canal minimal sont égaux.

FIG. 1

FIG. 2